# EUROPEAN PATENT SPECIFICATION

(11) **EP 4 064 248 B1**
(45) Date of publication and mention of the grant of the patent: **08.07.2026**
(21) Application number: 21164915.7
(22) Date of filing: 25.03.2021
(51) Int. Cl.: G09B 23/28

(54) **WIRELESS CONNECTION IN A CPR MANIKIN**
DRAHTLOSE VERBINDUNG IN EINEM CPR-MODELL
CONNEXION SANS FIL DANS UN MANNEQUIN DE RÉANIMATION CARDIO-PULMONAIRE

(43) Date of publication of application: 28.09.2022
(73) Proprietor: Ambu A/S, 2750 Ballerup (DK)
(72) Inventor: KRISTENSEN, Peter Aagaard, 2750 Ballerup (DK)
(74) Representative: COPA Copenhagen Patents

(56) References cited:
- WO-A1-2017/140317
- WO-A1-2018/138143
- KR-A- 20160 092 805
- US-A1- 2009 215 011

## Description

The present disclosure relates to a training manikin for practicing cardiopulmonary resuscitation (CPR), more specifically to a method and components allowing registration and transfer of parameters to and from the manikin, such as training parameters, e.g. related to ventilations and/or compressions.

### BACKGROUND

Training manikins having sensors to measure CPR performance, such as ventilation volume and compression depth and frequency are presently known. However, it is desired to enable transmission of the information of the CPR performance to a plurality of devices.

WO 2018/138143 A1 describes a solution wherein information is transmitted via Bluetooth using the Bluetooth advertising package to broadcast the information to a plurality of devices.

WO 2017/140317 A1 describes a solution of integrating a WiFi-enabled server module in the manikin, such as to allow a plurality of devices to retrieve information from the integrated server.

### SUMMARY

It is an object of the present disclosure to provide a solution, which at least improve the solutions of the prior art.

Thus, the present disclosure relates to a training manikin for practicing CPR and to a CPR training system comprising one or more of the disclosed training manikins, e.g. a first training manikin and/or a second training manikin. The disclosed system may further comprise one or more client devices.

The disclosed training manikin, such as the first training manikin and/or the second training manikin of the system, comprises one or more sensors for measuring one or more parameters indicative of the performance of a trainee during use of the training manikin in a training session. For example, the one or more sensors may include a ventilation sensor and/or a compression sensor, respectively adapted to measure parameters indicative of ventilation and/or compression performed on the training manikin.

The training manikin further comprises a wireless communication module adapted to establish wireless communication links with a plurality of client devices, such as client devices of the disclosed system, including establishing a first wireless communication link with a first client device of the plurality of client devices and establishing a second wireless communication link with a second client device of the plurality of client devices.

The wireless communication module is adapted to transmit training data based on the one or more parameters to the first client device using the first wireless communication link and to the second client device using the second wireless communication link. The wireless communication module is further adapted to receive first device data from the first client device using the first wireless communication link. The wireless communication module may be adapted to receive second device data from the second client device using the second wireless communication link.

The wireless communication module is a Bluetooth module configured for communication with the client devices in accordance with the Bluetooth protocol. Usage of the Bluetooth protocol is preferred due to low cost and limited transmission range, i.e. reduced interference. Bluetooth may, e.g., be Bluetooth Low Energy (BLE) and/or Bluetooth 4.0.

The first and second wireless communication links may be established while maintaining the other wireless communication link. For example, the second wireless communication link may be established before terminating the first wireless communication link, or the first wireless communication link may be established before terminating the second wireless communication link. The second wireless communication link may be established before establishing the first wireless communication link, or the first wireless communication links may be established before terminating the second wireless communication link. In practice, the first wireless communication link and the second wireless communication link may be established simultaneously.

The wireless communication module may be adapted to communicate using radio frequencies, e.g between 2.402 GHz and 2.480 GHz, or between 5.725 GHz and 5.875 GHz. The first wireless communication link may be established at a first communication frequency and the second wireless communication link may be established at a second communication frequency different from the first communication frequency. The first communication frequency and the second communication frequency may be between 2.402 GHz and 2.480 GHz. The first wireless communication link may be established at a first communication channel within a range of available channels and the second wireless communication link may be established at a second communication channel of the range of available channels. The first wireless communication link may change frequency according to a first frequency hopping scheme. The second wireless communication link may change frequency according to a second frequency hopping scheme. The second frequency hopping scheme may be different than the first frequency hopping scheme.

The wireless communication module may comprise a first radio. The first wireless communication link may utilize the first radio. For example, the wireless communication module may use the first radio to communicate with the first client device.

The wireless communication module may further comprise a second radio. The second wireless communication link may utilize the second radio. For example, the wireless communication module may use the second radio to communicate with the second client device.

The second wireless communication link may utilize the first radio. For example, the wireless communication module may use the first radio to communicate with the second client device. Particularly, the first radio may be used to communicate with both the first client device and the second client device. The training manikin may comprise a processing device adapted to control utilization of the first radio between being utilized for the first wireless communication link and being utilized for the second wireless communication link. For example, the wireless communication module may comprise a wireless module processing device adapted to control utilization of the first radio between being utilized for the first wireless communication link and being utilized for the second wireless communication link.

The training manikin may comprise a manikin processing device. The manikin processing device may be connected to the one or more sensors and the wireless communication module. The manikin processing device may be adapted to provide the training data based on the one or more parameters to the wireless communication module. For example, the manikin processing device may receive the one or more parameters from the one or more sensors and process the one or more parameters to obtain the training data. For example, the manikin processing device may convert a reading of a force sensor or an optical distance sensor to a compression depth and/or position to be provided as part of the training data, and/or the manikin processing device may convert a pressure measurement to a ventilation volume to be provided as part of the training data, etc. The manikin processing device may be adapted to control utilization of the first radio between being utilized for the first wireless communication link and being utilized for the second wireless communication link.

The training manikin may comprise one or more output components to output one or more perceptible output signals. The one or more output components may be adapted to output an output for the trainee to perceive, e.g. to provide feedback to the trainee during training. For example, the one or more output components may comprise one or more speakers and the one or more perceptible output signals may include an audible output signal output by the one or more speakers. Alternatively or additionally, the one or more output components may comprise one or more actuators and the one or more perceptible output signals may include movements (e.g. vibration or movement of a limb or similar) caused by the one or more actuators. Alternatively or additionally, the one or more output components may comprise one or more light emitters (e.g. LEDs) and the one or more perceptible output signals may include a visible output signal output by the one or more light emitters.

A first perceptible output signal may be output by the one or more output components based on the first device data. The manikin processing unit may be adapted to receive the first device data, and cause provision of the first perceptible output signal based thereon. For example, the first device data may include instructions indicative of a scenario for the training session, and one or more perceptible output signals, e.g. including the first perceptible output signal, may be output in accordance with the scenario. For example, the scenario may specify that after a predetermined time the manikin should provide a coughing sound, or similar. The first perceptible output signal may alternatively or additionally be output by the one or more output components in response to receipt of the first device data. For example, the first device data may include instructions for the manikin to provide a certain perceptible output signal, e.g. a coughing sound, and the perceptible output signal may be output in response to receipt of that instruction.

The wireless communication module may be adapted to relay information (e.g. identification numbers, names, experience, place of training session etc.) from the first client device to the second client device and/or vice versa. The wireless communication module may be adapted to transmit primary client data to the second client device using the second wireless communication link. The primary client data may be based on the first device data. The primary client data may be a subset of the first device data. The manikin processing device may be adapted to receive the first device data and provide the primary client data based on the first device data. The wireless communication module may be adapted to transmit secondary client data to the first client device using the first wireless communication link. The secondary client data may be based on the second device data. The secondary client data may be a subset of the second device data. The manikin processing device may be adapted to receive the second device data and provide the secondary client data based on the first device data.

The training manikin may comprise an electronic memory. The electronic memory may be part of a processing device of the training manikin, such as the manikin processing device. The electronic memory may be adapted to store one or more parameters based on the first device data and/or based on the second device data. For example, the manikin processing device may receive the first device data and/or the second device data and store the one or more parameters based on the first device data and/or based on the second device data in the electronic memory. For example, information (e.g. identification numbers, names, experience, place of training session etc.) from the client devices, i.e. from the first device data and/or the second device data, may be stored in the electronic memory. Data based on the parameters stored in the electronic memory may be transmitted to the client devices. For example, the wireless communication module may be adapted to transmit tertiary client data based on the one or more parameters stored in the electronic memory to the second client device using the second wireless communication link and/or to the first client device using the first wireless communication link.

As mentioned above, the disclosed CPR training system may comprise a first training manikin in accordance with the training manikin disclosed above. The CPR training system may comprise one or more further training manikins, such as a second training manikin, in accordance with the training manikin disclosed above.

The second training manikin may comprise one or more sensors for measuring one or more parameters indicative of the performance of a trainee during use of the second training manikin in the training session. The second training manikin may further comprise a wireless communication module adapted to establish and concurrently maintaining wireless communication links with a plurality of client devices, e.g. including establishing a third wireless communication link with the first client device of the plurality of client devices and/or establishing a fourth wireless communication link with a third client device of the plurality of client devices.

The wireless communication module of the second training manikin may be adapted to transmit training data based on the one or more parameters of the one or more sensors of the second training manikin to the first client device using the third wireless communication link and to the third client device using the fourth wireless communication link.

The wireless communication module of the second training manikin may be adapted to receive tertiary device data from the first client device using the third wireless communication link. The wireless communication module of the second training manikin may be adapted to receive quaternary device data from the third client device using the fourth wireless communication link.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
- Fig. 1: schematically illustrates an exemplary CPR training system,
- Fig. 2: is a block diagram of an exemplary training manikin and two client devices,
- Fig. 3: is a block diagram of an exemplary training manikin and two client devices, and
- Fig. 4: schematically illustrates an exemplary expanded CPR training system.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

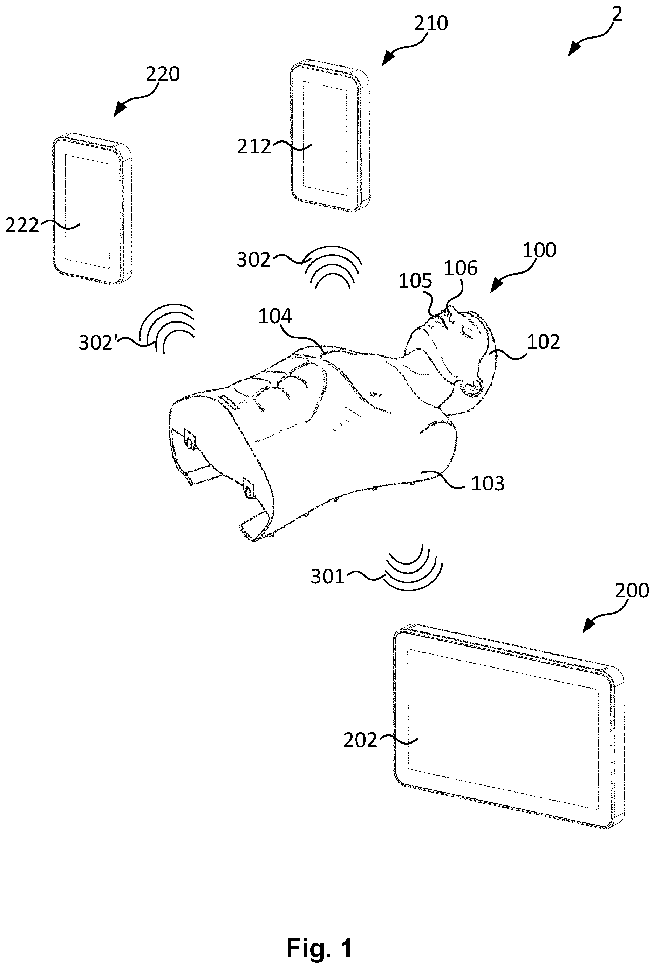

Fig. 1 schematically illustrates an exemplary CPR training system 2 comprising a training manikin 100 and a plurality of client devices including a first client device 200, a second client device 210 and an optional further second client device 220. For example, the first client device 200 may be an instructor device, and the second client device 210 and the further second client device 220 may be client devices of trainees, e.g. two trainees performing cooperative training on the manikin 100, or one trainee training on the manikin while another trainee is studying. Alternatively or additionally a client device, e.g. the second client device 210 or the further second client device 220 may work as a simulated defibrillator or other equipment relevant for the CPR training.

The training manikin 100 is for practicing cardiopulmonary resuscitation (CPR), e.g. for allowing a trainee to practice chest compression and/or lung ventilation. The training manikin 100 comprises a head 102 and a torso 103. The torso 103 comprises a chest portion 104, which is configured to simulate a patient's chest to allow compression during practice of chest compression. The chest portion 104 further comprises a lung portion (not shown), which is in fluid communication with a mouth 105 and nostrils 106 of the head 102. The lung portion and the mouth 105 and nostrils 106 simulates a patient's airways so as to allow practice of lung ventilation. Alternative training manikins may be only for practicing chest compression, i.e. the head 102 and/or the lung portion may be omitted.

The training manikin 100 is provided with one or more sensors for measuring one or more parameters indicative of the performance of the trainee during use of the training manikin in a training session. Exemplary parameters may include parameters indicative of lung ventilation volume, stomach inflation, compression depth, hand position on the chest, compression frequency and other parameters relevant for assessment of the training.

In Fig. 1, the training manikin 100 is illustrated as an adult sized training manikin. However, it is noted that the training manikin 100 according to the present disclosure may be any sized manikin, such as a baby sized manikin or a toddler sized manikin.

The client devices 200, 210, 220 may comprise respective displays 202, 212, 222, which may be touch sensitive displays. The client devices 200, 210, 220 may be tablets and/or smart phones.

The manikin comprises a wireless communication module adapted to establish wireless communication links with the plurality of client devices 200, 210, 220. The wireless communication module may establish a first wireless communication link 301 with the first client device 200 and establish a second wireless communication link 302 with the second client device 210. The wireless communication module may establish a further second wireless communication link 302' with the further second client device 220. More communication links may be established with further client devices (not shown) to the extent that is practical and useful.

The first, second, and further second wireless communication links may be established while maintaining the other wireless communication link(s). Hence, a plurality of wireless communication links may be maintained simultaneously.

The manikin 100 may, e.g. via the wireless communication module, be adapted to transmit training data based on the one or more parameters to the first client device 200 using the first wireless communication link 301 and to the second client device 210 using the second wireless communication link 302. The training data may further be transmitted also to the further second client device 220 using the further second wireless communication link 302'. Thereby, both the first client device 200, the second client device 210 and the further second client device 220 receive the training data, e.g. both the trainee(s) and the instructor receives training data and may be able to review and analyse the training data individually.

The manikin 100 may, e.g. via the wireless communication module, be adapted to receive first device data from the first client device 200 using the first wireless communication link 301. The manikin 100 may, e.g. via the wireless communication module, be adapted to receive second device data from the second client device 210 using the second wireless communication link 302. The manikin 100 may, e.g. via the wireless communication module, be adapted to receive further second device data from the further second client device 220 using the further second wireless communication link 302'. Thus, the manikin 100 may facilitate two-way communication between the manikin 100 and each of the connected client devices 200, 210, 220.

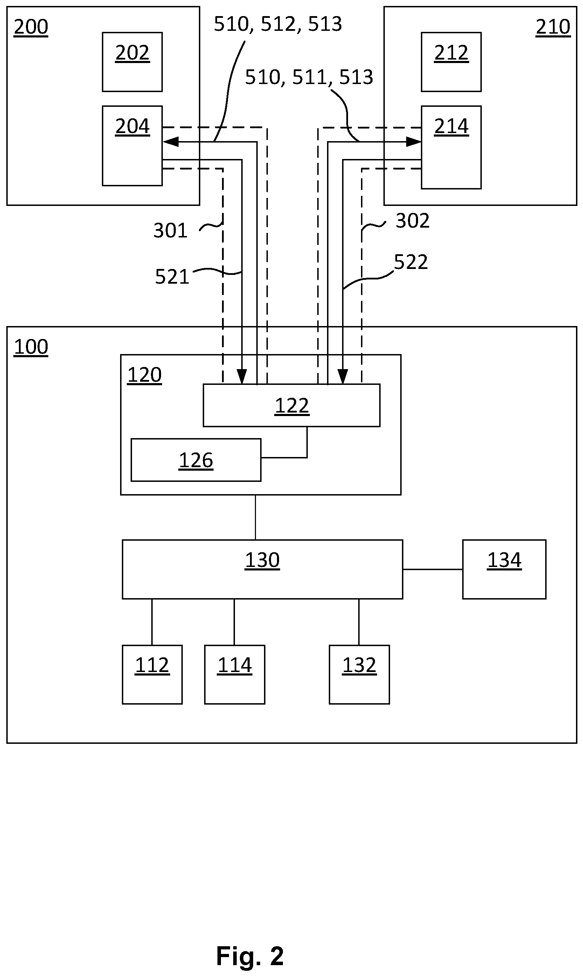

Fig. 2 is a block diagram of an exemplary training manikin 100 and two client devices, including a first client device 200 and a second client device 210. The manikin 100 and client devices 200, 210 may be the corresponding devices of the system 2 described in relation to Fig. 1.

The manikin 100 comprises sensors including a ventilation sensor 114 and a compression sensor 112. As noted above, a manikin may in some embodiments be only for practicing chest compression, in which case the ventilation sensor 114 may be omitted. The sensors 112, 114 may measure one or more parameters indicative of the performance of a trainee during use of the manikin 100. For example, the parameters may include parameters indicative of lung ventilation volume, stomach inflation, compression depth, hand position on the chest, compression frequency and other parameters relevant for assessment of the training.

The manikin 100 comprises a manikin processing device 130 connected to the sensors 112, 114 and the wireless communication module 120. The manikin processing device 130 is adapted to provide training data based on the one or more parameters from the sensors 112, 114 to the wireless communication module 120. The manikin processing device 130 may further be connected to an electronic memory 134 of the manikin 100, which may be adapted to store various information, e.g. including parameters based on data received from the client devices 200, 210, the training data, and/or the one or more parameters from the sensors 112, 114. The electronic memory 134 may further store manikin specific data, e.g. production year, type, date of last service check etc.

The manikin 100 comprises a wireless communication module 120 adapted to establish wireless communication links 301, 302 with a plurality of client devices, e.g. the first client device 200 and the second client device 210. Thus, in the illustrated example, a first wireless communication link 301 is established with the first client device 200, e.g. with a first client wireless communication module 204 of the first client device 200. Furthermore, a second wireless communication link 302 is established with the second client device 210, e.g. with a second client wireless communication module 214 of the second client device 210. The wireless communication modules 120, 204, 214 be Bluetooth modules configured for communication in accordance with a Bluetooth protocol. Alternatively, the wireless communication modules 120, 204, 214 may utilize other wireless communication modalities.

In the example as illustrated in Fig. 2, the wireless communication module 120 comprises a first radio 122, and the wireless communication links 301, 302 utilizes the first radio 122. A processing device, e.g. a designated wireless module processing device 126 of the wireless communication module 120, or the manikin processing device 130, may control the first radio 122, such as to maintain the wireless communication links 301 302 with the plurality of client devices 200, 210. For example, the processing device 126, 130 may control utilization of the first radio 122 between being utilized for the first wireless communication link 301 and being utilized for the second wireless communication link 302.

The wireless communication module 120 is adapted to transmit training data 510 based on the one or more parameters of the sensors 112, 114 to the first client device 200 using the first wireless communication link 301. The wireless communication module 120 may be further adapted to transmit the training data 510 to the second client device 210 using the second wireless communication link 302.

The wireless communication module 120 is further adapted to receive first device data 521 from the first client device 200 using the first wireless communication link 301. The wireless communication module 120 may further be adapted to receive second device data 522 from the second client device 210 using the second wireless communication link 302. Thus, the client devices 200, 210 may communicate to the manikin 100. For example, as illustrated, the manikin may comprise an output component 132, e.g. a speaker, an actuator or similar, connected to the manikin processing device 130 and configured to output a perceptible output signal, e.g. a sound, a movement or similar, based on the first device data 521 and/or the second device data 522 and/or in response to receipt of the first device data 521 and/or the second device data 522. For example, the instructor may send an instruction to the manikin 100 to provide a sound indicative of coughing or breathing or the like, or provide a movement, e.g. indicative of movement of a limb. Alternatively, the instructor may send instructions to the manikin 100 to act in accordance with a specific scenario, and the manikin, e.g. via the output component 132 may output perceptible output signals in accordance with that scenario.

The two-way communication with the manikin may further facilitate sharing of personal and/or other information, such as name of the trainee/instructor, place of training, etc., between the connected client devices 200, 210 (and 220 of Fig. 1). For example, the first device data 521 may comprise information, such as details of the scenario, name of the instructor, place of training etc., which may be shared with the second client device 210. Thus, the wireless communication module 120 may be adapted to transmit primary client data 511, based on the first device data 521, to the second client device 210, using the second wireless communication link 302. The manikin processing unit 130 may be adapted to receive the first device data 521 and provide the primary client data 511 based on the first device data 521. Similarly, the second device data 522 may comprise information, such as details of the trainee, e.g. ID number, name, association, experience, etc. which may be shared with the first client device 200. Thus, the wireless communication module 120 may be adapted to transmit secondary client data 512, based on the second device data 522, to the first client device 200, using the first wireless communication link 301. The manikin processing unit 130 may be adapted to receive the second device data 522 and provide the secondary client data 512 based on the second device data 522.

The electronic memory 134 may be adapted to store parameters based on the first device data 521 and/or the second device data 522. For example, the electronic memory 134 may be adapted to store the personal and other information to be shared between the connected client devices 200, 210. The wireless communication module 120 may be adapted to transmit tertiary client data 513 based on one or more parameters stored in the electronic memory 134 to the first client device 200 using the first wireless communication link 301 and/or to the second client device 210 using the second wireless communication link 302. The tertiary client data 513 may comprise production year, type, date of last service check etc. Based on the tertiary client data 513, a client device, such as the first client device 200 and/or the second client device 210 may alert the user if service is needed, or similar. A service supplier, e.g. via a client device, may transmit data to the training manikin 100 to update the date of last service check in the electronic memory.

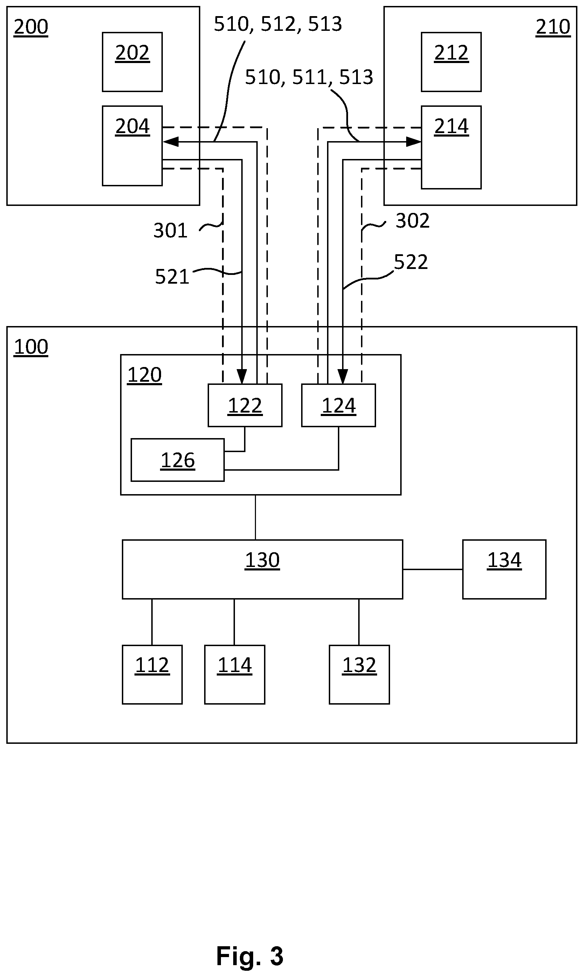

Fig. 3 is a block diagram of an exemplary training manikin 100 and two client devices, including a first client device 200 and a second client device 210, similar to the block diagram as illustrated in Fig. 2. However, the wireless communication module 120 as illustrated in Fig. 3 illustrates an alternative embodiment of the wireless communication module 120.

In the example as illustrated in Fig. 3, the wireless communication module 120 comprises a first radio 122 and a second radio 124. The first wireless communication link 301 utilizes the first radio 122, and the second wireless communication link 302 utilizes the second radio 124.

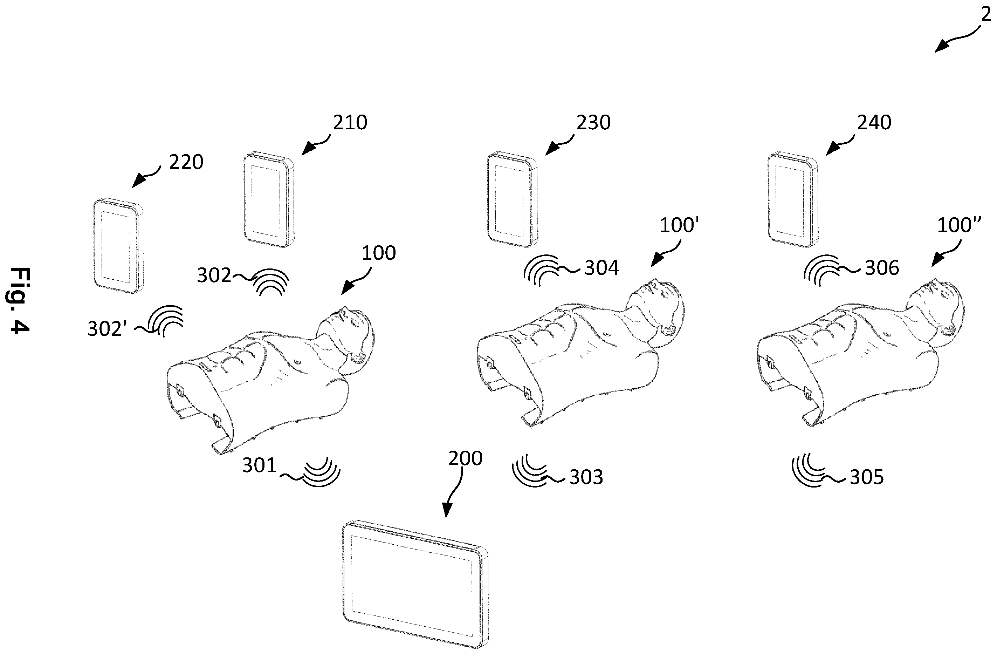

Fig. 4 schematically illustrates an expanded exemplary CPR training system 2 comprising a plurality of training manikins 100, 100', 100" and a plurality of client devices 200, 210, 220, 230, 240. It should be understood that the disclosed system is not to be regarded as limited to the number of manikins and client devices illustrated and may comprise even more manikins and client devices as illustrated.

The system 2 comprises the first training manikin 100 as described in relation to the previous figures. Furthermore, the system 2 comprises further manikins, e.g. a second training manikin 100' and a third training manikin 100", all of which may be similar to the training manikin 100 as described earlier. Particularly, the further manikins 100', 100" each comprises sensors for measuring the one or more parameters indicative of the performance of a trainee during use of the respective training manikin in a training session, and a wireless communication module adapted to establish wireless communication links 303, 304, 305, 306 with at least two client devices 230, 240. For example, the second manikin 100', such as the wireless communication module of the second manikin 100', may be adapted to establish a third wireless communication link 303 with the first client device 200 and a fourth wireless communication link 304 with a third client device 230. The third manikin 100", such as the wireless communication module of the third manikin 100", may be adapted to establish a fifth wireless communication link 305 with the first client device 200 and a sixth wireless communication link 306 with a fourth client device 240.

As seen, a plurality of the manikins, e.g. the first manikin 100, the second manikin 100' and the third manikin 100", may be connected with a common client device, e.g. the first client device 200. For example, as previously mentioned, the first client device 200 may be an instructor device, and it may be advantageous that the instructor receives data from more than one, or all, manikins in a training session.

Thus, the first manikin 100, such as the wireless communication module of the first manikin 100, the second manikin 100', such as the wireless communication module of the second manikin 100', and the third manikin 100", such as the wireless communication module of the third manikin 100", may be adapted to transmit training data to the first client device 200 using the first wireless communication link 301, the third wireless communication link 303 and the fifth wireless communication link 305, respectively. The second manikin 100', such as the wireless communication module of the second manikin 100', may further be adapted to transmit training data to the third client device 230 using the fourth wireless communication link 304, and the third manikin 100", such as the wireless communication module of the third manikin 100", may further be adapted to transmit training data to the fourth client device 240 using the sixth wireless communication link 306.

The second manikin 100', such as the wireless communication module of the second manikin 100', and the third manikin, such as the wireless communication module of the third manikin 100", may be adapted to receive device data from the first client device 200 using the third wireless communication link 303 and the fifth wireless communication link 305, respectively. The second manikin 100', such as the wireless communication module of the second manikin 100', may be adapted to receive device data from the third client device 230 using the fourth wireless communication link 304. The third manikin 100", such as the wireless communication module of the third manikin 100", may be adapted to receive device data from the fourth client device 240 using the sixth wireless communication link 306.

The invention is defined in the appended claims.

### LIST OF REFERENCES

- 2: system
- 100, 100', 100": manikin
- 102: head
- 103: torso
- 104: chest portion
- 105: mouth
- 106: nostrils
- 112: compression sensor
- 114: ventilation sensor
- 120: wireless communication module
- 122: first radio
- 124: second radio
- 126: wireless module processing device
- 130: manikin processing device
- 132: output component
- 134: electronic memory
- 200: first client device
- 202: display
- 204: client wireless communication module
- 210: second client device
- 212: display
- 214: client wireless communication module
- 220: further second client device
- 222: display
- 230: third client device
- 232: display
- 240: fourth client device
- 242: display
- 301: first wireless communication link
- 302: second wireless communication link
- 302': further second wireless communication link
- 303: third wireless communication link
- 304: fourth wireless communication link
- 305: fifth wireless communication link
- 306: sixth wireless communication link
- 510: training data
- 511: primary client data
- 512: secondary client data
- 513: tertiary client data
- 521: first device data
- 522: second device data
- 523: third device data

## Claims

1. A training manikin (100) for practicing CPR comprising:
- one or more sensors (112, 114) for measuring one or more parameters indicative of the performance of a trainee during use of the training manikin in a training session,
- a wireless communication module (120) adapted to establish and concurrently maintaining wireless communication links with a plurality of client devices, including establishing a first wireless communication link (301) with a first client device (200) of the plurality of client devices and establishing a second wireless communication link (302) with a second client device (210) of the plurality of client devices,
the wireless communication module being adapted to transmit training data based on the one or more parameters to the first client device using the first wireless communication link and to the second client device using the second wireless communication link,
the wireless communication module further being adapted to receive first device data from the first client device using the first wireless communication link,
**characterised by** the wireless communication module being a Bluetooth module configured for communication with the client devices in accordance with the Bluetooth protocol.

2. Training manikin according to claim 1, wherein the wireless communication module is adapted to communicate using radio frequencies between 2.402 GHz and 2.480 GHz.

3. Training manikin according to any of the preceding claims, wherein the wireless communication module comprises a first radio, and wherein the first wireless communication link utilizes the first radio.

4. Training manikin according to claim 3, wherein the wireless communication module comprises a second radio, and wherein the second wireless communication link utilizes the second radio.

5. Training manikin according to claim 3, wherein the second wireless communication link utilizes the first radio.

6. Training manikin according to claim 5 comprising a processing device adapted to control utilization of the first radio between being utilized for the first wireless communication link and being utilized for the second wireless communication link.

7. Training manikin according to any of the preceding claims comprising a manikin processing device connected to the one or more sensors and the wireless communication module, the manikin processing device being adapted to provide the training data based on the one or more parameters to the wireless communication module.

8. Training manikin according to any of the preceding claims comprising one or more output components to output one or more perceptible output signals.

9. Training manikin according to claim 8, wherein a first perceptible output signal is output by the one or more output components based on the first device data and/or in response to receipt of the first device data.

10. Training manikin according to any of claims 8-9, wherein the one or more output components include a speaker and the one or more perceptible output signals includes an audible output signal output by the speaker.

11. Training manikin according to any of the preceding claims, wherein the wireless communication module is adapted to transmit primary client data based on the first device data to the second client device using the second wireless communication link.

12. Training manikin according to any of the preceding claims, wherein the wireless communication module further being adapted to receive second device data from the second client device using the second wireless communication link.

13. Training manikin according to claim 12, wherein the wireless communication module is adapted to transmit secondary client data based on the second device data to the first client device using the first wireless communication link.

14. Training manikin according to any of the preceding claims comprising an electronic memory adapted to store one or more parameters based on the first device data.

15. Training manikin according to claim 14, wherein the wireless communication module is adapted to transmit tertiary client data based on the one or more parameters stored in the electronic memory to the second client device using the second wireless communication link.

16. A CPR training system (2) comprising a first training manikin (100) and a plurality of client devices including a first client device (200) and a second client device (210), the first training manikin comprising:
- one or more sensors (112, 114) for measuring one or more parameters indicative of the performance of a trainee during use of the first training manikin in a training session,
- a wireless communication module (120) adapted to establish and concurrently maintaining wireless communication links with a plurality of client devices, including establishing a first wireless communication link (301) with a first client device (200) of the plurality of client devices and establishing a second wireless communication link (302) with a second client device (210) of the plurality of client devices,
the wireless communication module being adapted to transmit training data based on the one or more parameters to the first client device using the first wireless communication link and to the second client device using the second wireless communication link,
the wireless communication module further being adapted to receive first device data from the first client device using the first wireless communication link,
**characterised by** the wireless communication module being a Bluetooth module configured for communication with the client devices in accordance with the Bluetooth protocol.

17. The CPR training system according to claim 16, further comprising a second training manikin and the plurality of client devices including a third client device, the second training manikin comprising:
- one or more sensors for measuring one or more parameters indicative of the performance of a trainee during use of the second training manikin in the training session,
- a wireless communication module adapted to establish and concurrently maintaining wireless communication links with a plurality of client devices, including establishing a third wireless communication link with the first client device of the plurality of client devices and establishing a fourth wireless communication link with a third client device of the plurality of client devices,
the wireless communication module being adapted to transmit training data based on the one or more parameters to the first client device using the third wireless communication link and to the third client device using the fourth wireless communication link,
the wireless communication module further being adapted to receive tertiary device data from the first client device using the third wireless communication link.

## Patentansprüche

1. Trainingsmodell (100) zum Üben von CPR, umfassend:
- einen oder mehrere Sensoren (112, 114) zum Messen eines oder mehrerer Parameter, die die Leistung eines Auszubildenden während der Verwendung des Trainingsmodells in einer Trainingseinheit angeben,
- ein drahtloses Kommunikationsmodul (120), das dazu ausgelegt ist, drahtlose Kommunikationsverbindungen mit einer Vielzahl von Client-Vorrichtungen herzustellen und gleichzeitig aufrechtzuerhalten, einschließlich des Herstellens einer ersten drahtlosen Kommunikationsverbindung (301) mit einer ersten Client-Vorrichtung (200) aus der Vielzahl von Client-Vorrichtungen und des Herstellens einer zweiten drahtlosen Kommunikationsverbindung (302) mit einer zweiten Client-Vorrichtung (210) aus der Vielzahl von Client-Vorrichtungen,
wobei das drahtlose Kommunikationsmodul so ausgelegt ist, dass es Trainingsdaten auf der Grundlage des einen oder der mehreren Parameter an die erste Client-Vorrichtung unter Verwendung der ersten drahtlosen Kommunikationsverbindung und an die zweite Client-Vorrichtung unter Verwendung der zweiten drahtlosen Kommunikationsverbindung überträgt,
wobei das drahtlose Kommunikationsmodul weiter so ausgelegt ist, dass es erste Vorrichtungsdaten von der ersten Client-Vorrichtung unter Verwendung der ersten drahtlosen Kommunikationsverbindung empfängt,
**dadurch gekennzeichnet, dass** das drahtlose Kommunikationsmodul ein Bluetooth-Modul ist, das für die Kommunikation mit den Client-Vorrichtungen gemäß dem Bluetooth-Protokoll konfiguriert ist.

2. Trainingsmodell nach Anspruch 1, wobei das drahtlose Kommunikationsmodul so ausgelegt ist, dass es unter Verwendung von Funkfrequenzen zwischen 2,402 GHz und 2,480 GHz kommuniziert.

3. Trainingsmodell nach einem der vorstehenden Ansprüche, wobei das drahtlose Kommunikationsmodul ein erstes Funkgerät umfasst, und wobei die erste drahtlose Kommunikationsverbindung das erste Funkgerät nutzt.

4. Trainingsmodell nach Anspruch 3, wobei das drahtlose Kommunikationsmodul ein zweites Funkgerät umfasst, und wobei die zweite drahtlose Kommunikationsverbindung das zweite Funkgerät nutzt.

5. Trainingsmodell nach Anspruch 3, wobei die zweite drahtlose Kommunikationsverbindung das erste Funkgerät nutzt.

6. Trainingsmodell nach Anspruch 5, das eine Verarbeitungsvorrichtung umfasst, die dazu ausgelegt ist, die Nutzung des ersten Funkgeräts zwischen dessen Nutzung für die erste drahtlose Kommunikationsverbindung und dessen Nutzung für die zweite drahtlose Kommunikationsverbindung zu steuern.

7. Trainingsmodell nach einem der vorstehenden Ansprüche, das eine mit dem einen oder mehreren Sensoren und dem drahtlosen Kommunikationsmodul verbundene Modellverarbeitungsvorrichtung umfasst, wobei die Modellverarbeitungsvorrichtung so ausgelegt ist, dass sie dem drahtlosen Kommunikationsmodul die Trainingsdaten auf der Grundlage des einen oder mehrerer Parameter bereitstellt.

8. Trainingsmodell nach einem der vorstehenden Ansprüche, das eine oder mehrere Ausgabekomponenten umfasst, um ein oder mehrere wahrnehmbare Ausgabesignale auszugeben.

9. Trainingsmodell nach Anspruch 8, wobei ein erstes wahrnehmbares Ausgangssignal von der einen oder mehreren Ausgangskomponenten auf der Grundlage der ersten Vorrichtungsdaten und/oder als Reaktion auf den Empfang der ersten Vorrichtungsdaten ausgegeben wird.

10. Trainingsmodell nach einem der Ansprüche 8-9, wobei die eine oder mehreren Ausgangskomponenten einen Lautsprecher einschließen und das eine oder die mehreren wahrnehmbaren Ausgangssignale ein vom Lautsprecher ausgegebenes hörbares Ausgangssignal einschließen.

11. Trainingsmodell nach einem der vorstehenden Ansprüche, wobei das drahtlose Kommunikationsmodul so ausgelegt ist, dass es primäre Client-Daten auf der Grundlage der ersten Vorrichtungsdaten an die zweite Client-Vorrichtung unter Verwendung der zweiten drahtlosen Kommunikationsverbindung überträgt.

12. Trainingsmodell nach einem der vorstehenden Ansprüche, wobei das drahtlose Kommunikationsmodul weiter so ausgelegt ist, dass es zweite Vorrichtungsdaten von der zweiten Client-Vorrichtung unter Verwendung der zweiten drahtlosen Kommunikationsverbindung empfängt.

13. Trainingsmodell nach Anspruch 12, wobei das drahtlose Kommunikationsmodul so ausgelegt ist, dass es sekundäre Client-Daten auf der Grundlage der zweiten Vorrichtungsdaten an die erste Client-Vorrichtung unter Verwendung der ersten drahtlosen Kommunikationsverbindung überträgt.

14. Trainingsmodell nach einem der vorstehenden Ansprüche, das einen elektronischen Speicher umfasst, der dazu ausgelegt ist, einen oder mehrere Parameter auf der Grundlage der ersten Vorrichtungsdaten zu speichern.

15. Trainingsmodell nach Anspruch 14, wobei das drahtlose Kommunikationsmodul so ausgelegt ist, dass es tertiäre Client-Daten auf der Grundlage der in dem elektronischen Speicher gespeicherten einen oder mehreren Parametern an die zweite Client-Vorrichtung unter Verwendung der zweiten drahtlosen Kommunikationsverbindung überträgt.

16. CPR-Trainingssystem (2), umfassend ein erstes Trainingsmodell (100) und eine Vielzahl von Client-Vorrichtungen, einschließlich einer ersten Client-Vorrichtung (200) und einer zweiten Client-Vorrichtung (210), wobei das erste Trainingsmodell Folgendes umfasst:
- einen oder mehrere Sensoren (112, 114) zum Messen eines oder mehrerer Parameter, die die Leistung eines Auszubildenden während der Verwendung des ersten Trainingsmodells in einer Trainingseinheit angeben,
- ein drahtloses Kommunikationsmodul (120), das dazu ausgelegt ist, drahtlose Kommunikationsverbindungen mit einer Vielzahl von Client-Vorrichtungen herzustellen und gleichzeitig aufrechtzuerhalten, einschließlich des Herstellens einer ersten drahtlosen Kommunikationsverbindung (301) mit einer ersten Client-Vorrichtung (200) aus der Vielzahl von Client-Vorrichtungen und des Herstellens einer zweiten drahtlosen Kommunikationsverbindung (302) mit einer zweiten Client-Vorrichtung (210) aus der Vielzahl von Client-Vorrichtungen,
wobei das drahtlose Kommunikationsmodul so ausgelegt ist, dass es Trainingsdaten auf der Grundlage des einen oder der mehreren Parameter an die erste Client-Vorrichtung unter Verwendung der ersten drahtlosen Kommunikationsverbindung und an die zweite Client-Vorrichtung unter Verwendung der zweiten drahtlosen Kommunikationsverbindung überträgt,
wobei das drahtlose Kommunikationsmodul weiter so ausgelegt ist, dass es erste Vorrichtungsdaten von der ersten Client-Vorrichtung unter Verwendung der ersten drahtlosen Kommunikationsverbindung empfängt,
**dadurch gekennzeichnet, dass** das drahtlose Kommunikationsmodul ein Bluetooth-Modul ist, das für die Kommunikation mit den Client-Vorrichtungen gemäß dem Bluetooth-Protokoll konfiguriert ist.

17. CPR-Trainingssystem nach Anspruch 16, weiter umfassend ein zweites Trainingsmodell und die Vielzahl von Client-Vorrichtungen, einschließlich einer dritten Client-Vorrichtung, wobei das zweite Trainingsmodell Folgendes umfasst:
- einen oder mehrere Sensoren zum Messen eines oder mehrerer Parameter, die die Leistung eines Auszubildenden während der Verwendung des zweiten Trainingsmodells in der Trainingseinheit angeben,
- ein drahtloses Kommunikationsmodul, das dazu ausgelegt ist, drahtlose Kommunikationsverbindungen mit einer Vielzahl von Client-Vorrichtungen herzustellen und gleichzeitig aufrechtzuerhalten, einschließlich des Herstellens einer dritten drahtlosen Kommunikationsverbindung mit der ersten Client-Vorrichtung aus der Vielzahl von Client-Vorrichtungen und des Herstellens einer vierten drahtlosen Kommunikationsverbindung mit der dritten Client-Vorrichtung aus der Vielzahl von Client-Vorrichtungen,
wobei das drahtlose Kommunikationsmodul so ausgelegt ist, dass es Trainingsdaten auf der Grundlage des einen oder der mehreren Parameter an die erste Client-Vorrichtung unter Verwendung der dritten drahtlosen Kommunikationsverbindung und an die dritte Client-Vorrichtung unter Verwendung der vierten drahtlosen Kommunikationsverbindung überträgt,
wobei das drahtlose Kommunikationsmodul weiter so ausgelegt ist, dass es tertiäre Vorrichtungsdaten von der ersten Client-Vorrichtung unter Verwendung der dritten drahtlosen Kommunikationsverbindung empfängt.

## Revendications

1. Mannequin d'entraînement (100) pour pratiquer la RCP comprenant :
- un ou plusieurs capteurs (112, 114) pour mesurer un ou plusieurs paramètres indicatifs de la performance d'un stagiaire lors de l'utilisation du mannequin d'entraînement au cours d'une séance d'entraînement,
- un module de communication sans fil (120) adapté à établir et à maintenir simultanément des liaisons de communication sans fil avec une pluralité de dispositifs client, incluant l'établissement d'une première liaison de communication sans fil (301) avec un premier dispositif client (200) parmi la pluralité de dispositifs client et l'établissement d'une deuxième liaison de communication sans fil (302) avec un deuxième dispositif client (210) parmi la pluralité de dispositifs client,
le module de communication sans fil étant adapté à transmettre des données d'entraînement sur la base d'un ou de plusieurs paramètres vers le premier dispositif client en utilisant la première liaison de communication sans fil et vers le deuxième dispositif client en utilisant la deuxième liaison de communication sans fil,
le module de communication sans fil étant en outre adapté à recevoir des premières données de dispositif provenant du premier dispositif client en utilisant la première liaison de communication sans fil,
**caractérisé en ce que** le module de communication sans fil est un module Bluetooth configuré pour communiquer avec les dispositifs client conformément au protocole Bluetooth.

2. Mannequin d'entraînement selon la revendication 1, dans lequel le module de communication sans fil est adapté à communiquer en utilisant des radiofréquences entre 2 402 GHz et 2 480 GHz.

3. Mannequin d'entraînement selon l'une quelconque des revendications précédentes, dans lequel le module de communication sans fil comprend une première radio, et dans lequel la première liaison de communication sans fil utilise la première radio.

4. Mannequin d'entraînement selon la revendication 3, dans lequel le module de communication sans fil comprend une deuxième radio, et dans lequel la deuxième liaison de communication sans fil utilise la deuxième radio.

5. Mannequin d'entraînement selon la revendication 3, dans lequel la deuxième liaison de communication sans fil utilise la première radio.

6. Mannequin d'entraînement selon la revendication 5, comprenant un dispositif de traitement adapté à commander l'utilisation de la première radio entre le fait qu'elle est utilisée pour la première liaison de communication sans fil et le fait qu'elle est utilisée pour la deuxième liaison de communication sans fil.

7. Mannequin d'entraînement selon l'une quelconque des revendications précédentes, comprenant un dispositif de traitement de mannequin relié au un ou plusieurs capteurs et au module de communication sans fil, le dispositif de traitement de mannequin étant adapté à fournir les données d'entraînement au module de communication sans fil sur la base d'un ou de plusieurs paramètres.

8. Mannequin d'entraînement selon l'une quelconque des revendications précédentes, comprenant un ou plusieurs composants de sortie pour délivrer en sortie un ou plusieurs signaux de sortie perceptibles.

9. Mannequin d'entraînement selon la revendication 8, dans lequel un premier signal de sortie perceptible est délivré en sortie par le un ou plusieurs composants de sortie sur la base des premières données de dispositif et/ou en réponse à la réception des premières données de dispositif.

10. Mannequin d'entraînement selon l'une quelconque des revendications 8 à 9, dans lequel le un ou plusieurs composants de sortie incluent un haut-parleur et le un ou plusieurs signaux de sortie perceptibles incluent un signal de sortie audible délivré en sortie par le haut-parleur.

11. Mannequin d'entraînement selon l'une quelconque des revendications précédentes, dans lequel le module de communication sans fil est adapté à transmettre des données de client primaires sur la base des premières données de dispositif vers le deuxième dispositif client en utilisant la deuxième liaison de communication sans fil.

12. Mannequin d'entraînement selon l'une quelconque des revendications précédentes, dans lequel le module de communication sans fil est en outre adapté à recevoir des deuxièmes données de dispositif provenant du deuxième dispositif client en utilisant la deuxième liaison de communication sans fil.

13. Mannequin d'entraînement selon la revendication 12, dans lequel le module de communication sans fil est adapté à transmettre au premier dispositif client des données de client secondaires sur la base des deuxièmes données de dispositif en utilisant la première liaison de communication sans fil.

14. Mannequin d'entraînement selon l'une quelconque des revendications précédentes comprenant une mémoire électronique adaptée à stocker un ou plusieurs paramètres sur la base des premières données de dispositif.

15. Mannequin d'entraînement selon la revendication 14, dans lequel le module de communication sans fil est adapté à transmettre au deuxième dispositif client des données de client tertiaires sur la base d'un ou de plusieurs paramètres stockés dans la mémoire électronique en utilisant la deuxième liaison de communication sans fil.

16. Système d'entraînement à la RCP (2) comprenant un premier mannequin d'entraînement (100) et une pluralité de dispositifs client incluant un premier dispositif client (200) et un deuxième dispositif client (210), le premier mannequin d'entraînement comprenant :
- un ou plusieurs capteurs (112, 114) pour mesurer un ou plusieurs paramètres indicatifs de la performance d'un stagiaire pendant l'utilisation du premier mannequin d'entraînement dans une séance d'entraînement,
- un module de communication sans fil (120) adapté à établir et à maintenir simultanément des liaisons de communication sans fil avec une pluralité de dispositifs client, incluant l'établissement d'une première liaison de communication sans fil (301) avec un premier dispositif client (200) parmi la pluralité de dispositifs client et l'établissement d'une deuxième liaison de communication sans fil (302) avec un deuxième dispositif client (210) parmi la pluralité de dispositifs client,
le module de communication sans fil étant adapté à transmettre au premier dispositif client des données d'entraînement sur la base d'un ou de plusieurs paramètres en utilisant la première liaison de communication sans fil et au deuxième dispositif client en utilisant la deuxième liaison de communication sans fil,
le module de communication sans fil étant en outre adapté à recevoir des premières données de dispositif provenant du premier dispositif client en utilisant la première liaison de communication sans fil,
**caractérisé en ce que** le module de communication sans fil est un module Bluetooth configuré pour communiquer avec les dispositifs client conformément au protocole Bluetooth.

17. Système d'entraînement à la RCP selon la revendication 16, comprenant en outre un deuxième mannequin d'entraînement et la pluralité de dispositifs client incluant un troisième dispositif client, le deuxième mannequin d'entraînement comprenant :
- un ou plusieurs capteurs pour mesurer un ou plusieurs paramètres indicatifs de la performance d'un stagiaire pendant l'utilisation du deuxième mannequin d'entraînement dans la séance d'entraînement,
- un module de communication sans fil adapté à établir et à maintenir simultanément des liaisons de communication sans fil avec une pluralité de dispositifs client, incluant l'établissement d'une troisième liaison de communication sans fil avec le premier dispositif client parmi la pluralité de dispositifs client et l'établissement d'une quatrième liaison de communication sans fil avec un troisième dispositif client parmi la pluralité de dispositifs client,
le module de communication sans fil étant adapté à transmettre des données d'entraînement sur la base d'un ou de plusieurs paramètres au premier dispositif client en utilisant la troisième liaison de communication sans fil et au troisième dispositif client en utilisant la quatrième liaison de communication sans fil
le module de communication sans fil étant en outre adapté à recevoir des données de dispositif tertiaires provenant du premier dispositif client en utilisant la troisième liaison de communication sans fil.
